# FASCICULE DE BREVET EUROPEEN

(11) **EP 3 850 392 B1**
(45) Date de publication et mention de la délivrance du brevet: **09.11.2022**
(21) Numéro de dépôt: 19763020.5
(22) Date de dépôt: 10.09.2019
(51) Int. Cl.: G01C 21/00, G06V 20/58, G01S 5/16, G06K 9/62

(54) **SYSTÈME ET PROCÉDÉ DE LOCALISATION DE LA POSITION D'UN OBJET ROUTIER PAR APPRENTISSAGE AUTOMATIQUE NON SUPERVISÉ**
SYSTEM UND VERFAHREN ZUR POSITIONSBESTIMMUNG EINES STRASSENOBJEKTS DURCH UNÜBERWACHTES MASCHINENLERNEN
SYSTEM AND METHOD FOR LOCATING THE POSITION OF A ROAD OBJECT BY UNSUPERVISED MACHINE LEARNING

(30) Priorité: 11.09.2018 FR 1858120
(43) Date de publication de la demande: 21.07.2021
(73) Titulaire: Continental Automotive France, 31100 Toulouse (FR); Continental Automotive GmbH, 30165 Hannover (DE)
(72) Inventeur: GIL CASALS, Silvia, 31100 Toulouse (FR)
(74) Mandataire: Hardouin, Briac
(86) Numéro de dépôt international: PCT/EP2019/074125
(87) Numéro de publication internationale: WO 2020/053221

(56) Documents cités:
- FR-A1- 2 979 987
- US-A1- 2017 343 362
- US-A1- 2018 120 857

## Description

### Art antérieur

La présente invention concerne le domaine de la localisation des objets routiers associés à une portion d'un réseau routier. Plus précisément, elle concerne des systèmes, des procédés et un ensemble de programmes informatiques permettant de localiser de manière précise la position d'au moins un objet routier associé à une portion d'un réseau routier.

De nombreuses applications nécessitent une localisation précise des objets de signalisation routière verticaux (par ex. un panneau de signalisation) et horizontaux (par ex. un marquage au sol). On peut citer, par exemple, l'aide à la conduite, la gestion du patrimoine routier, la sécurité routière ou la mise au point d'outils multimédias de navigation 3D géographique.

Dans ce contexte, la mise à jour des systèmes de cartographie en temps réel est un des aspects clés pour la navigation des véhicules routiers dits « connectés » et autonomes. De plus en plus de véhicules routiers sont équipés de caméras, radars, lidars et divers capteurs permettant la détection d'informations provenant de la route, comme par exemple des caméras pour la détection de panneaux de signalisation ou de marquage sur la route, des capteurs de suspension pour la détection de dos d'âne ou de nids de poule, la détection d'incidents par des freinages d'urgence ou des évitements, la détection de présence de verglas, de gravier ou d'objets sur la route. La transmission des informations de ces capteurs couplée à la position géographique (par exemple, une position GPS) des véhicules routiers, permettrait la mise à jour en temps réel des systèmes de cartographie.

Or, deux problèmes empêchent une mise en oeuvre aisée : les systèmes de géolocalisation de type GPS restent imprécis et il se peut que certaines des détections soient des faux positifs.

Le document de brevet FR 2 979 987 A1 représente l'art antérieur.

Il existe alors une certaine incertitude quant à la position réelle des objets routiers, ce qui n'est pas acceptable pour les applications mentionnées plus haut.

### Résumé de l'invention

La présente invention vise donc à supprimer, au moins partiellement, les inconvénients précités. Pour cela, dans un premier aspect de l'invention, l'invention propose un système de localisation de la position d'au moins un objet routier associé à une portion d'un réseau routier.

Enfin, dans un deuxième aspect de l'invention, il est proposé un procédé de localisation de la position d'au moins un objet routier, le procédé étant utilisable dans le système du premier aspect de l'invention.

Ainsi, l'invention se rapporte à un système de localisation de la position d'au moins un objet routier associé à une portion d'un réseau routier. Le système comprend une unité de réception d'informations routières, une unité de traitement d'informations routières et une unité de calcul. L'unité de réception d'informations routières est configurée pour recevoir une pluralité d'informations routières géolocalisées qui sont relatives à l'objet routier, la pluralité d'informations routières étant obtenue à partir d'au moins un capteur associé à chacun parmi une pluralité de véhicules routiers. L'unité de traitement d'informations routières est configurée pour identifier le type de l'objet routier à partir de la pluralité d'informations routières et pour calculer une pluralité de coordonnées géographiques associée à l'objet routier, chaque coordonnée géographique étant calculée à partir de la pluralité d'informations routières associée à l'un parmi la pluralité de véhicules routiers. L'unité de calcul est configurée pour :
- créer, dans une première étape de création, pour chaque type d'objet routier, un premier vecteur caractéristique comprenant le type de l'objet routier et la pluralité de coordonnées géographiques associée,
- partitionner, dans une première étape de partitionnement, à partir d'un algorithme de classification non supervisé basé sur la densité de distribution, au moins une partie de l'ensemble des premiers vecteurs caractéristiques en une pluralité de classes, et
- calculer, dans une étape de calcul, pour chaque classe, au moins une mesure de tendance centrale à partir des coordonnées géographiques associées à la classe, la mesure de tendance centrale étant représentative de la position de l'objet routier.

L'unité de calcul est en outre configurée, pour chaque classe, pour :
- créer, dans une deuxième étape de création, un deuxième vecteur caractéristique comprenant au moins une composante pour chaque coordonnée géographique de la classe, chaque composante étant représentative d'un angle d'azimut d'une direction d'observation de l'objet routier associé à la coordonnée géographique correspondante,
- partitionner, dans une deuxième étape de partitionnement, à partir de l'algorithme de classification non supervisé basée sur la densité de distribution, au moins une partie de l'ensemble des deuxièmes vecteurs caractéristiques en une pluralité de sous-classes, et
- calculer, dans l'étape de calcul, pour chaque sous-classe, au moins une mesure de tendance centrale à partir des coordonnées géographiques associées à la sous-classe, la mesure de tendance centrale étant représentative de la position de l'objet routier selon une direction d'observation de l'objet routier.

Selon un premier mode de réalisation, l'unité de calcul est, en outre, configurée pour séparer, dans une première étape de séparation de la première étape de création, chaque coordonnée géographique en une composante de position en latitude et une composante de position en longitude.

Selon un second mode de réalisation, l'unité de calcul est en outre configurée pour séparer, dans une deuxième étape de séparation de la deuxième étape de création, chaque angle d'azimut en une composante angulaire en sinus et une composante angulaire en cosinus.

L'invention couvre également un procédé de localisation de la position d'au moins un objet routier associé à une portion d'un réseau routier. Le type de l'objet routier est identifié à partir d'une pluralité d'informations routières géolocalisées qui sont relatives à l'objet routier, la pluralité d'informations routières étant obtenue à partir d'au moins un capteur associé à chacun parmi une pluralité de véhicules routiers. L'objet routier est, en outre, associé à une pluralité de coordonnées géographiques, chaque coordonnée géographique étant calculée à partir de la pluralité d'informations routières associée à l'un parmi la pluralité de véhicules routiers. Le procédé comprend les étapes suivantes :
- une première étape de création durant laquelle, on crée, pour chaque type d'objet routier, un premier vecteur caractéristique comprenant le type de l'objet routier et la pluralité de coordonnées géographiques associée,
- une première étape de partitionnement durant laquelle, on partitionne à partir d'un algorithme de classification non supervisé basé sur la densité de distribution, au moins une partie de l'ensemble des premiers vecteurs caractéristiques en une pluralité de classes, et
- une étape de calcul durant laquelle, on calcule, pour chaque classe, au moins une mesure de tendance centrale à partir des coordonnées géographiques associées à la classe, la mesure de tendance centrale étant représentative de la position de l'objet routier.
   Le procédé comprend, en outre, les étapes suivantes, pour chaque classe,
- une deuxième étape de création durant laquelle, on crée, un deuxième vecteur caractéristique comprenant au moins une composante pour chaque coordonnée géographique de la classe, chaque composante étant représentative d'un angle d'azimut d'une direction d'observation de l'objet routier associé à la coordonnée géographique correspondante,
- une deuxième étape de partitionnement durant laquelle, on partitionne à partir de l'algorithme de classification non supervisé basé sur la densité de distribution, au moins une partie de l'ensemble des deuxièmes vecteurs caractéristiques en une pluralité de sous-classes, et
dans lequel, dans l'étape de calcul, on calcule, en outre, pour chaque sous-classe, au moins une mesure de tendance centrale à partir des coordonnées géographiques associées à la sous-classe, la mesure de tendance centrale étant représentative de la position de l'objet routier selon une direction d'observation de l'objet routier.

Dans un premier mode de réalisation, la première étape de création comprend en outre une première étape de séparation durant laquelle, on sépare chaque coordonnée géographique en une composante de position en latitude et une composante de position en longitude.

Dans un second mode de réalisation, la deuxième étape de création comprend en outre une deuxième étape de séparation durant laquelle, on sépare chaque angle d'azimut en une composante angulaire en sinus et une composante angulaire en cosinus.

Dans un exemple de mise en oeuvre du système et du procédé, l'algorithme de classification non supervisé basé sur la densité de distribution est d'un type choisi parmi : DBSCAN, OPTICS, CLARANS, DENCLUE et CLIQUE.

Dans une autre mise en oeuvre du système et du procédé, la mesure de tendance centrale d'une classe ou d'une sous-classe est choisie parmi : le centroïde et le médoïde.

### Brève description des figures

D'autres caractéristiques et avantages de l'invention seront mieux compris à la lecture de la description qui va suivre et en référence aux dessins annexés, donnés à titre illustratif et nullement limitatif.
[Fig. 1] La **figure 1** représente une scène routière.
[Fig. 2] La **figure 2** représente, selon l'invention, un système de localisation de la position d'au moins un objet routier de la scène routière de la **figure 1****.**
[Fig. 3] La **figure 3** représente un procédé mis en œuvre par l'unité de calcul du système de la **figure 2****.**

### Description détaillée

Pour des raisons de clarté, les éléments représentés ne sont pas nécessairement représentés à la même échelle, les uns par rapport aux autres, sauf mention contraire.

Afin de s'affranchir des problèmes de l'art antérieur, il a été envisagé de s'appuyer sur l'ensemble d'un parc de véhicules routiers et de rassembler les différentes informations collectées afin d'écarter les faux positifs et corriger l'imprécision des systèmes de type GPS par l'effet de masse.

Plus précisément, le principe général de l'invention est basé sur la détermination de la position d'un objet routier grâce à l'apprentissage automatique non supervisé (« unsupervised machine learning », en langue anglaise) et plus particulièrement la classification non supervisée basée sur la densité de distribution (« Density-based clustering », en langue anglaise). On entend par objet routier, tout objet associé à une portion d'un réseau routier, et ce, de manière permanente ou temporaire. Il peut s'agir par exemple, d'objets de signalisation verticaux (par ex. un panneau de signalisation) et horizontaux (par ex. un marquage au sol, un ralentisseur, un rond-point). Il peut également s'agir d'irrégularités de la chaussée (par ex. un nid-de-poule, une zone de verglas) ou d'un évènement associé à la portion du réseau routier (par ex. un accident).

Dans l'invention, on considère qu'un objet routier est associé à une pluralité de coordonnées géographiques qui ont été obtenues à partir d'une pluralité d'informations routières associées à une pluralité de véhicules routiers, en circulation sur la portion d'un réseau routier. Pour cela, les véhicules routiers, selon l'invention, sont munis d'au moins un capteur capable d'acquérir des informations routières géolocalisées qui sont relatives à l'objet routier. Par exemple, le capteur peut être un capteur d'images ou un capteur de suspension du véhicule routier. On entend par véhicule routier, tout véhicule doté d'un moteur (généralement à combustion interne ou électrique) destiné à le mouvoir sur un réseau routier et capable de transporter des personnes ou des charges (par exemple, une voiture, un camion ou une motocyclette).

Ainsi, l'invention propose de déterminer la position la plus probable d'un objet routier en appliquant une classification non supervisée basée sur la densité de distribution, à la pluralité de coordonnées géographiques associée au type de l'objet routier. Dans ce cadre, la classification non supervisée basée sur la densité de distribution correspond à un modèle d'apprentissage automatique de type descriptif dans lequel on découvre automatiquement une partition d'un jeu d'observations, de sorte que les observations à l'intérieur d'une même classe (« clusters », en langue anglaise) sont similaires et que les observations appartenant à deux classes différentes sont différentes.

En pratique, dans l'invention, la classification non supervisée basée sur la densité de distribution est appliquée selon une démarche en deux phases.

Dans la première phase, dite de classification géographique, on applique une première fois la classification non supervisée basée sur la densité de distribution, à la pluralité de coordonnées géographiques associée au type de l'objet routier de sorte à la regrouper automatiquement dans des classes homogènes. Ensuite, dans la deuxième phase, dite de classification angulaire, on applique une deuxième fois la classification non supervisée basée sur la densité de distribution, à chaque classe produite dans la première phase, de sorte à la regrouper automatiquement dans des sous-classes homogènes à partir des angles d'azimut de l'objet routier qui sont associés aux coordonnées géographiques de la classe.

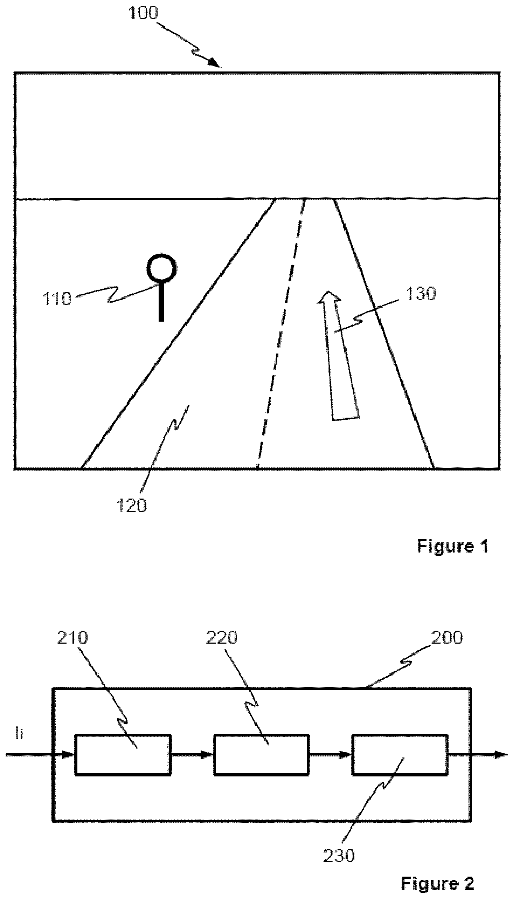

La **figure 1** illustre, selon l'invention, une image représentant une scène routière 100 acquise par un capteur d'images (non représenté) qui est couplée à un véhicule routier (non représenté). La scène routière 100 comprend un objet routier 110 associé à une portion d'un réseau routier 120. Dans une mise en oeuvre particulière, la scène routière 100 comprend une pluralité d'objets routiers 110. A la **figure 1****,** l'image a été acquise pendant que le véhicule routier circulait dans le sens de circulation 130.

La **figure 2** illustre un système 200 de localisation de la position d'au moins un objet routier 110 de la scène routière 100. Le système 200 comprend une unité de réception d'informations routières 210, une unité de traitement d'informations routières 220 et une unité de calcul 230 qui sont fonctionnellement couplées l'une à l'autre. Dans une mise en oeuvre particulière, l'unité de réception d'informations routières 210, l'unité de traitement d'informations routières 220 et l'unité de calcul 230 sont comprises dans une seule unité de traitement de type processeur.

A la **figure 2****,** l'unité de réception d'informations routières 210 est configurée pour recevoir une pluralité d'informations routières Iᵢ, de type image, qui sont relatives à la scène routière 100. Dans une mise en oeuvre particulière, l'unité de réception d'informations routières 210 est un processeur de type connu. Comme indiqué plus haut, la pluralité d'informations routières Iᵢ est obtenue à partir d'au moins un capteur associé à chacun parmi une pluralité de véhicules routiers. Dans l'exemple de la **figure 2****,** le capteur est du type capteur d'images. Dans un autre exemple, le capteur est du type capteur de caractéristiques physiques d'un véhicule routier, tel un capteur de suspension, un capteur radar/lidar ou un capteur d'obstacles.

A la **figure 2****,** l'unité de traitement d'informations routières 220 est configurée pour identifier le type de l'objet routier 110 à partir de la pluralité d'informations routières Iᵢ. Dans une mise en oeuvre particulière, l'unité de traitement d'informations routières 220 est un processeur de type connu configuré pour exécuter un algorithme connu de reconnaissance d'objet routier 110 au sein d'une ou plusieurs images. Dans un exemple de cette mise en oeuvre, le type de l'objet routier 110 correspond à un type de signalisation verticale permettant d'indiquer un danger, signaler une interdiction ou une obligation, donner des indications et des informations. Dans cet exemple, si la scène routière 100 comprend un objet routier 110 prescrivant une vitesse de circulation limitée à 70 km/h et un autre objet routier 110 prescrivant une vitesse de circulation limitée à 50 km/h, alors on considèrera que la scène routière 100 comprend deux types d'objets routiers 110 qui sont différents. Dans un autre exemple, le type de l'objet routier 110 correspond à un type de signalisation horizontale tels des dessins, flèches, lignes et inscriptions sur la chaussée.

Dans une autre mise en oeuvre particulière, l'unité de traitement d'informations routières 220 est un processeur de type connu configuré pour exécuter un algorithme connu de reconnaissance d'objet routier 110 à partir de mesures caractéristiques physiques d'un véhicule routier. Dans un exemple de cette mise en oeuvre, le type de l'objet routier 110 correspond à une irrégularité de la chaussée, un ralentisseur ou un rond-point. Ainsi, par exemple, l'unité de traitement d'informations routières 220 peut déduire la présence d'un nid-de-poule ou d'un dos d'âne à partir de mesures d'un capteur de suspension du véhicule routier.

L'unité de traitement d'informations routières 220 est, en outre, configurée pour calculer une pluralité de coordonnées géographiques associée à l'objet routier 110, chaque coordonnée géographique étant calculée à partir de la pluralité d'informations routières Iᵢ associée à l'un parmi la pluralité de véhicules routiers. En effet, dans l'invention, on considère que la pluralité d'informations routières Iᵢ associée à chaque véhicule routier est géolocalisée. Ainsi, à partir de la pluralité d'informations routières Iᵢ de chaque véhicule routier, l'unité de traitement d'informations routières 220 peut estimer la position géographique de l'objet routier 110.

C'est à ce niveau que réside le problème que se propose de résoudre l'invention. En effet, il a été observé que pour un même objet routier 110, la pluralité d'informations routières Iᵢ qui est associée à chacun parmi la pluralité de véhicules routiers, produit des coordonnées géographiques sensiblement différentes. Ainsi, dans ce cas, il existe une certaine incertitude quant à la position réelle d'un objet routier 110.

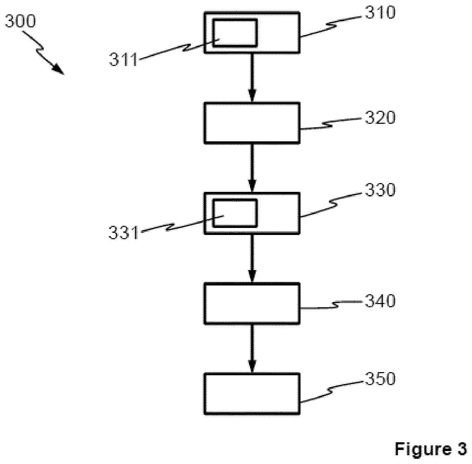

Pour résoudre ce problème, dans la **figure 2****,** l'unité de calcul 230 est configurée pour mettre en oeuvre un procédé 300 illustré à la **figure 3****.**

En pratique, l'unité de calcul 230 est configurée pour créer, dans une première étape de création 310, pour chaque type d'objet routier 110, un premier vecteur caractéristique comprenant le type de l'objet routier 110 et la pluralité de coordonnées géographiques associée à l'objet routier 110.

En outre, l'unité de calcul 230 est configurée pour partitionner, dans une première étape de partitionnement 320, à partir d'un algorithme de classification non supervisé basée sur la densité de distribution, au moins une partie de l'ensemble des premiers vecteurs caractéristiques en une pluralité de classes homogènes.

Dans un exemple de l'invention, l'algorithme de classification non supervisé basé sur la densité de distribution est d'un type choisi parmi : DBSCAN, OPTICS, CLARANS, DENCLUE et CLIQUE. En outre, si besoin, et selon l'algorithme utilisé, il est possible d'optimiser les hyperparamètres de ces algorithmes pour obtenir des classes qui sont clairement distinctes les unes des autres. Pour cela, dans un exemple, on optimise seul ou en combinaison des hyperparamètres qui permettent de maximiser le nombre de classes. Ceci a pour effet d'éviter que des coordonnées géographiques associées à des objets routiers 110 différents, mais qui sont physiquement proches, soient fusionnées dans une même classe.

Dans une mise en oeuvre particulière de l'invention, l'unité de calcul 230 est, en outre, configurée pour séparer, dans une première étape de séparation 311 de la première étape de création 310, chaque coordonnée géographique en une composante de position en latitude et une composante de position en longitude. Ainsi, dans cette phase de classification géographique, on réalise une classification à trois dimensions, car on considère le type d'objet routier 110, la latitude et la longitude de l'objet routier 110.

Par la suite, pour chaque classe, on réalise une sous-classification pour prendre en considération le sens de circulation du véhicule routier à partir duquel l'objet routier 110 a été identifié. Pour cela, l'unité de calcul 230 est configurée pour créer, dans une deuxième étape de création 330, un deuxième vecteur caractéristique comprenant au moins une composante pour chaque coordonnée géographique de la classe, chaque composante étant représentative d'un angle d'azimut d'une direction d'observation de l'objet routier 110 associé à la coordonnée géographique correspondante. On entend par azimut, la position de l'objet routier 110 par rapport au nord.

Dans une mise en oeuvre particulière de l'invention, l'unité de calcul 230 est, en outre, configurée pour séparer, dans une deuxième étape de séparation 331 de la deuxième étape de création 330, chaque angle d'azimut en une composante angulaire en sinus et une composante angulaire en cosinus. Dans cette mise en oeuvre, on considère que l'angle d'azimut est exprimé en radians. Dans le cas où l'angle d'azimut serait exprimé en degrés, il suffit de le convertir en radians, au préalable. Ainsi, dans cette phase de classification angulaire, on réalise une classification à deux dimensions, car on considère le sinus et le cosinus de l'angle d'azimut associé à une coordonnée géographique de l'objet routier 110.

En outre, l'unité de calcul 230 est configurée pour partitionner, dans une deuxième étape de partitionnement 340, à partir de l'algorithme de classification non supervisé basée sur la densité de distribution, au moins une partie de l'ensemble des deuxièmes vecteurs caractéristiques en une pluralité de sous-classes.

Enfin, l'unité de calcul 230 est configurée pour calculer, dans une étape de calcul 350, pour chaque sous-classe, au moins une mesure de tendance centrale à partir des coordonnées géographiques associées à la sous-classe, la mesure de tendance centrale étant représentative de la position de l'objet routier 110 selon une direction d'observation de l'objet routier 110.

Dans un exemple de l'invention, la mesure de tendance centrale d'une sous-classe est choisie parmi : le centroïde et le médoïde. On entend par centroïde le vecteur moyen de tous les éléments d'une sous-classe. On entend par médoïde l'élément le plus au centre d'une sous-classe.

Dans un mode particulier de réalisation de l'invention, on ne réalise pas l'étape de sous-classification. Cela peut être nécessaire selon un type d'objet routier prédéterminé, pour lequel la prise en compte du sens de circulation du véhicule routier n'est pas nécessaire. Par exemple, cela peut être le cas lorsque l'objet routier correspond à une irrégularité de la chaussée qui est la même dans tous les sens de circulation. Dans ce mode particulier, l'unité de calcul 230 est configurée pour calculer, dans l'étape de calcul 350, pour chaque classe, au moins une mesure de tendance centrale à partir des coordonnées géographiques associées à la classe, la mesure de tendance centrale étant représentative de la position de l'objet routier 110.

Dans un autre mode particulier de réalisation de l'invention, les différentes étapes du procédé 300 sont déterminées par des instructions de programmes d'ordinateurs. Par conséquent, l'invention vise aussi un programme avec un code de programme d'ordinateur fixé sur un support de stockage non transitoire, de code de programme étant susceptible d'exécuter les étapes du procédé 300 lorsque le programme d'ordinateur est chargé dans l'ordinateur ou exécuté dans l'ordinateur.

La présente invention a été décrite et illustrée dans la présente description détaillée et dans les figures. Toutefois, la présente invention ne se limite pas aux formes de réalisation présentées. Ainsi, d'autres variantes et modes de réalisation peuvent être déduits et mis en oeuvre par la personne du métier à la lecture de la présente description et des figures annexées.

## Revendications

1. Système de localisation de la position d'au moins un objet routier (110) associé à une portion d'un réseau routier, le système comprenant une unité de réception d'informations routières (210), une unité de traitement d'informations routières (220) et une unité de calcul (230) :
• l'unité de réception d'informations routières (210) est configurée pour recevoir une pluralité d'informations routières géolocalisées qui sont relatives à l'objet routier (110), la pluralité d'informations routières étant obtenue à partir d'au moins un capteur associé à chacun parmi une pluralité de véhicules routiers,
• l'unité de traitement d'informations routières (220) est configurée pour identifier le type de l'objet routier (110) à partir de la pluralité d'informations routières et pour calculer une pluralité de coordonnées géographiques associée à l'objet routier (110), chaque coordonnée géographique étant calculée à partir de la pluralité d'informations routières associée à l'un parmi la pluralité de véhicules routiers,
• l'unité de calcul (230) caractérisé en étant configurée pour :
- créer, dans une première étape de création (310), pour chaque type d'objet routier (110), un premier vecteur caractéristique comprenant le type de l'objet routier (110) et la pluralité de coordonnées géographiques associée,
- partitionner, dans une première étape de partitionnement (320), à partir d'un algorithme de classification non supervisé basé sur la densité de distribution, au moins une partie de l'ensemble des premiers vecteurs caractéristiques en une pluralité de classes, et
l'unité de calcul (230) étant en outre configurée, pour chaque classe déterminée à l'étape de partitionnement, pour :
• créer, dans une deuxième étape de création (330), un deuxième vecteur caractéristique comprenant au moins une composante pour chaque coordonnée géographique de la classe, chaque composante étant représentative d'un angle d'azimut d'une direction d'observation de l'objet routier (110) associé à la coordonnée géographique correspondante,
• partitionner, dans une deuxième étape de partitionnement (340), à partir de l'algorithme de classification non supervisé basée sur la densité de distribution, au moins une partie de l'ensemble des deuxièmes vecteurs caractéristiques en une pluralité de sous-classes, et
• calculer, dans l'étape de calcul (350), pour chaque sous-classe, au moins une mesure de tendance centrale à partir des coordonnées géographiques associées à la sous-classe, la mesure de tendance centrale étant représentative de la position de l'objet routier (110) selon une direction d'observation de l'objet routier (110).

2. Système selon la revendication 1, dans lequel l'unité de calcul (230) est, en outre, configurée pour séparer, dans une première étape de séparation de la première étape de création (310), chaque coordonnée géographique en une composante de position en latitude et une composante de position en longitude.

3. Système selon l'une quelconque des revendications 1 à 2, dans lequel l'unité de calcul (230) est en outre configurée pour séparer, dans une deuxième étape de séparation (331) de la deuxième étape de création (330), chaque angle d'azimut en une composante angulaire en sinus et une composante angulaire en cosinus.

4. Procédé de localisation de la position d'au moins un objet routier (110) associé à une portion d'un réseau routier (120) dont le type de l'objet routier (110) est identifié à partir d'une pluralité d'informations routières géolocalisées qui sont relatives à l'objet routier (110), la pluralité d'informations routières étant obtenue à partir d'au moins un capteur associé à chacun parmi une pluralité de véhicules routiers, l'objet routier (110) étant, en outre, associé à une pluralité de coordonnées géographiques, chaque coordonnée géographique étant calculée à partir de la pluralité d'informations routières associée à l'un parmi la pluralité de véhicules routiers, le procédé étant **caractérisé par** les étapes suivantes :
• une première étape de création (310) durant laquelle, on crée, pour chaque type d'objet routier (110), un premier vecteur caractéristique comprenant le type de l'objet routier (110) et la pluralité de coordonnées géographiques associée,
• une première étape de partitionnement (320) durant laquelle, on partitionne à partir d'un algorithme de classification non supervisé basé sur la densité de distribution, au moins une partie de l'ensemble des premiers vecteurs caractéristiques en une pluralité de classes, et
le procédé comprenant en outre, les étapes suivantes, pour chaque classe déterminée lors de l'étape de partitionnement :
• une deuxième étape de création (330) durant laquelle, on crée, un deuxième vecteur caractéristique comprenant au moins une composante pour chaque coordonnée géographique de la classe, chaque composante étant représentative d'un angle d'azimut d'une direction d'observation de l'objet routier (110) associé à la coordonnée géographique correspondante,
• une deuxième étape de partitionnement (340) durant laquelle, on partitionne à partir de l'algorithme de classification non supervisé basé sur la densité de distribution, au moins une partie de l'ensemble des deuxièmes vecteurs caractéristiques en une pluralité de sous-classes, et
dans lequel, dans l'étape de calcul (350), on calcule, en outre, pour chaque sous-classe, au moins une mesure de tendance centrale à partir des coordonnées géographiques associées à la sous-classe, la mesure de tendance centrale étant représentative de la position de l'objet routier (110) selon une direction d'observation de l'objet routier (110).

5. Procédé selon la revendication 4, dans lequel la première étape de création (310) comprend en outre une première étape de séparation (311) durant laquelle, on sépare chaque coordonnée géographique en une composante de position en latitude et une composante de position en longitude.

6. Procédé selon l'une quelconque des revendications 4 à 5, dans lequel la deuxième étape de création (330) comprend en outre une deuxième étape de séparation (331) durant laquelle, on sépare chaque angle d'azimut en une composante angulaire en sinus et une composante angulaire en cosinus.

7. Procédé selon l'une quelconque des revendications 4 à 6, dans lequel l'algorithme de classification non supervisé basé sur la densité de distribution est d'un type choisi parmi : DBSCAN, OPTICS, CLARANS, DENCLUE et CLIQUE.

8. Procédé selon l'une quelconque des revendications 4 à 7, dans lequel la mesure de tendance centrale d'une classe ou d'une sous-classe est choisie parmi : le centroïde et le médoïde.

## Patentansprüche

1. System zur Lokalisierung der Position mindestens eines einem Abschnitt eines Straßennetzes zugeordneten Straßenobjekts (110), wobei das System eine Empfangseinheit von Straßeninformationen (210), eine Verarbeitungseinheit von Straßeninformationen (220) und eine Recheneinheit (230) enthält:
• die Empfangseinheit von Straßeninformationen (210) ist konfiguriert, eine Vielzahl geolokalisierter Straßeninformationen zu empfangen, die sich auf das Straßenobjekt (110) beziehen, wobei die Vielzahl von Straßeninformationen ausgehend von mindestens einem jedem von einer Vielzahl von Straßenfahrzeugen zugeordneten Sensor erhalten wird,
• die Verarbeitungseinheit von Straßeninformationen (220) ist konfiguriert, den Typ des Straßenobjekts (110) ausgehend von der Vielzahl von Straßeninformationen zu identifizieren und eine Vielzahl von dem Straßenobjekt (110) zugeordneten geographischen Koordinaten zu berechnen, wobei jede geographische Koordinate ausgehend von der einem von der Vielzahl von Straßenfahrzeugen zugeordneten Vielzahl von Straßeninformationen berechnet wird,
• wobei die Recheneinheit (230) **dadurch gekennzeichnet ist, dass** sie konfiguriert ist :
- in einem ersten Erzeugungsschritt (310) für jeden Typ von Straßenobjekt (110) einen ersten charakteristischen Vektor zu erzeugen, der den Typ des Straßenobjekts (110) und die zugeordnete Vielzahl geographischer Koordinaten enthält,
- in einem ersten Partitionierungsschritt (320) ausgehend von einem nicht überwachten dichtebasierten Clustering-Algorithmus mindestens einen Teil der Gesamtheit der ersten charakteristischen Vektoren in eine Vielzahl von Clustern zu partitionieren, und wobei die Recheneinheit (230) außerdem konfiguriert ist, für jeden im Partitionierungsschritt bestimmten Cluster:
• in einem zweiten Erzeugungsschritt (330) einen zweiten charakteristischen Vektor zu erzeugen, der mindestens eine Komponente für jede geographische Koordinate des Clusters enthält, wobei jede Komponente für einen Azimutwinkel einer Beobachtungsrichtung des Straßenobjekts (110) repräsentativ ist, das der entsprechenden geographischen Koordinate zugeordnet ist,
• in einem zweiten Partitionierungsschritt (340) ausgehend von dem nicht überwachten dichtebasierten Clustering-Algorithmus mindestens einen Teil der Gesamtheit der zweiten charakteristische Vektoren in eine Vielzahl von Teil-Clustern zu partitionieren, und
• im Rechenschritt (350) für jeden Teil-Cluster mindestens ein Maß der zentralen Tendenz ausgehend von den dem Teil-Cluster zugeordneten geographischen Koordinaten zu berechnen, wobei das Maß der zentralen Tendenz für die Position des Straßenobjekts (110) gemäß einer Beobachtungsrichtung des Straßenobjekts (110) repräsentativ ist.

2. System nach Anspruch 1, wobei die Recheneinheit (230) außerdem konfiguriert ist, in einem ersten Teilungsschritt des ersten Erzeugungsschritts (310) jede geographische Koordinate in eine Positionskomponente in Breitenrichtung und eine Positionskomponente in Längsrichtung zu teilen.

3. System nach einem der Ansprüche 1 bis 2, wobei die Recheneinheit (230) außerdem konfiguriert ist, in einem zweiten Teilungsschritt (331) des zweiten Erzeugungsschritts (330) jeden Azimutwinkel in eine Sinus-Winkelkomponente und eine Kosinus-Winkelkomponente zu teilen.

4. Verfahren zur Lokalisierung der Position mindestens eines einem Abschnitt eines Straßennetzes (120) zugeordneten Straßenobjekts (110), wobei der Typ des Straßenobjekts (110) ausgehend von einer Vielzahl geolokalisierter Straßeninformationen identifiziert wird, die sich auf das Straßenobjekt (110) beziehen, wobei die Vielzahl von Straßeninformationen ausgehend von mindestens einem jedem einer Vielzahl von Straßenfahrzeugen zugeordneten Sensor erhalten wird, wobei das Straßenobjekt (110) außerdem einer Vielzahl geographischer Koordinaten zugeordnet ist, wobei jede geographische Koordinate ausgehend von der einem von der Vielzahl von Straßenfahrzeugen zugeordneten Vielzahl von Straßeninformationen berechnet wird, wobei das Verfahren durch die folgenden Schritte gekennzeichnet ist :
• einen ersten Erzeugungsschritt (310), während dessen für jeden Typ von Straßenobjekt (110) ein erster charakteristischer Vektor erzeugt wird, der den Typ des Straßenobjekts (110) und die zugeordnete Vielzahl geographischer Koordinaten enthält,
• einen ersten Partitionierungsschritt (320), während dessen ausgehend von einem nicht überwachten dichtebasierten Clustering-Algorithmus mindestens ein Teil der Gesamtheit der ersten charakteristischen Vektoren in eine Vielzahl von Clustern partitioniert wird, und
das Verfahren außerdem für jeden im Partitionierungsschritt bestimmten Cluster die folgenden Schritte enthält:
• einen zweiten Erzeugungsschritt (330), während dessen ein zweiter charakteristischer Vektor erzeugt wird, der mindestens eine Komponente für jede geographische Koordinate des Clusters enthält, wobei jede Komponente für einen Azimutwinkel einer Beobachtungsrichtung des Straßenobjekts (110) repräsentativ ist, das der entsprechenden geographischen Koordinate zugeordnet ist,
• einen zweiten Partitionierungsschritt (340), während dessen ausgehend vom nicht überwachten dichtebasierten Clustering-Algorithmus mindestens ein Teil der Gesamtheit der zweiten charakteristischen Vektoren in eine Vielzahl von Teil-Clustern partitioniert wird, und
wobei im Rechenschritt (350) außerdem für jeden Teil-Cluster mindestens ein Maß der zentralen Tendenz ausgehend von den dem Teil-Cluster zugeordneten geographischen Koordinaten berechnet wird, wobei das Maß der zentralen Tendenz für die Position des Straßenobjekts (110) gemäß einer Beobachtungsrichtung des Straßenobjekts (110) repräsentativ ist.

5. Verfahren nach Anspruch 4, wobei der erste Erzeugungsschritt (310) außerdem einen ersten Teilungsschritt (311) enthält, während dessen jede geographische Koordinate in eine Positionskomponente in Breitenrichtung und eine Positionskomponente in Längenrichtung geteilt wird.

6. Verfahren nach einem der Ansprüche 4 bis 5, wobei der zweite Erzeugungsschritt (330) außerdem einen zweiten Teilungsschritt (331) enthält, während dessen jeder Azimutwinkel in eine Sinus-Winkelkomponente und eine Kosinus-Winkelkomponente geteilt wird.

7. Verfahren nach einem der Ansprüche 4 bis 6, wobei der nicht überwachte dichtebasierte Clustering-Algorithmus von einem Typ ist, der ausgewählt wird aus: DBSCAN, OPTICS, CLARANS, DENCLUE und CLIQUE.

8. Verfahren nach einem der Ansprüche 4 bis 7, wobei das Maß der zentralen Tendenz eines Clusters oder eines Teil-Clusters aus dem Zentroid und dem Medoid ausgewählt wird.

## Claims

1. System for locating the position of at least one road object (110) associated with a portion of a road network, the system comprising a road information receiving unit (210), a road information processing unit (220) and a computing unit (230):
• the road information receiving unit (210) is configured to receive a plurality of geolocated road information items which relate to the road object (110), the plurality of road information items being obtained from at least one sensor associated with each one of a plurality of road vehicles,
• the road information processing unit (220) is configured to identify the type of the road object (110) from the plurality of road information items and to calculate a plurality of geographic coordinates associated with the road object (110), each geographic coordinate being calculated from the plurality of road information items associated with one of the plurality of road vehicles,
• the computing unit (230) **characterized by** being configured to:
- create, in a first creation step (310), for each type of road object (110), a first characteristic vector comprising the type of the road object (110) and the associated plurality of geographic coordinates,
- partition, in a first partitioning step (320), on the basis of an unsupervised classification algorithm based on distribution density, at least a portion of the set of first characteristic vectors into a plurality of classes, and
the computing unit (230) being further configured, for each class determined in the partitioning step, to:
• create, in a second creation step (330), a second characteristic vector comprising at least one component for each geographic coordinate of the class, each component being representative of an azimuth angle of a direction of observation of the road object (110) associated with the corresponding geographic coordinate,
• partition, in a second partitioning step (340), on the basis of the unsupervised classification algorithm based on distribution density, at least a portion of the set of second characteristic vectors into a plurality of subclasses, and
• calculate, in the calculating step (350), for each subclass, at least one measure of central tendency from the geographic coordinates associated with the subclass, the measure of central tendency being representative of the position of the road object (110) in a direction of observation of the road object (110).

2. System according to Claim 1, wherein the computing unit (230) is further configured to separate, in a first separation step of the first creation step (310), each geographic coordinate into a position component in terms of latitude and a position component in terms of longitude.

3. System according to either one of Claims 1 and 2, wherein the computing unit (230) is further configured to separate, in a second separation step (331) of the second creation step (330), each azimuth angle into an angular component in terms of sine and an angular component in terms of cosine.

4. Method for locating the position of at least one road object (110) associated with a portion of a road network (120), the type of road object (110) of which is identified from a plurality of geolocated road information items which relate to the road object (110), the plurality of road information items being obtained from at least one sensor associated with each one of a plurality of road vehicles, the road object (110) further being associated with a plurality of geographic coordinates, each geographic coordinate being calculated from the plurality of road information items associated with one of the plurality of road vehicles, the method being **characterized by** the following steps:
• a first creation step (310) in which is created, for each type of road object (110), a first characteristic vector comprising the type of the road object (110) and the associated plurality of geographic coordinates,
• a first partitioning step (320) in which is partitioned, on the basis of an unsupervised classification algorithm based on distribution density, at least a portion of the set of first characteristic vectors into a plurality of classes, and
the method further comprising the following steps, for each class determined in the partitioning step:
• a second creation step (330) in which is created a second characteristic vector comprising at least one component for each geographic coordinate of the class, each component being representative of an azimuth angle of a direction of observation of the road object (110) associated with the corresponding geographic coordinate,
• a second partitioning step (340) in which is partitioned, on the basis of the unsupervised classification algorithm based on distribution density, at least a portion of the set of second characteristic vectors into a plurality of subclasses, and
in which is further calculated, in the calculating step (350), for each subclass, at least one measure of central tendency from the geographic coordinates associated with the subclass, the measure of central tendency being representative of the position of the road object (110) in a direction of observation of the road object (110).

5. Method according to Claim 4, wherein the first creation step (310) further comprises a first separation step (311) in which each geographic coordinate is separated into a position component in terms of latitude and a position component in terms of longitude.

6. Method according to either one of Claims 4 and 5, wherein the second creation step (330) further comprises a second separation step (331) in which each azimuth angle is separated into an angular component in terms of sine and an angular component in terms of cosine.

7. Method according to any one of Claims 4 to 6, wherein the unsupervised classification algorithm based on distribution density is of a type chosen from: DBSCAN, OPTICS, CLARANS, DENCLUE and CLIQUE.

8. Method according to any one of Claims 4 to 7, wherein the measure of central tendency of a class or of a subclass is chosen from: the centroid and the medoid.
